# EUROPEAN PATENT APPLICATION

(11) **EP 1 662 250 A1**
(43) Date of publication of application: **31.05.2006**
(21) Application number: 04028336.8
(22) Date of filing: 30.11.2004
(51) Int. Cl.: G01N 21/896, G02B 5/30, G01B 11/06, G01J 4/00

(54) **Inspecting device for optical films**

(71) Applicant: Optimax Technology Corp., Ping Chen, Taoyuan (TW)
(72) Inventor: Yeh, Shih-Feng, Ping Chen Taoyuan (TW); Cheng, Yao-Chung, Ping Chen Taoyuan (TW)
(74) Representative: Beck, Michael Rudolf

(57) **Abstract**

The invention is an inspecting device for optical films used to inspect the thickness homogeneousness and defects of optical films. It comprises one or more than one illuminant, one or more than one polarization device, a filtering device and a scattering device. The light radiates a beam passing through the filtering device to filter the most suitable beam for the inspection. The beam is polarized through the polarization device. The polarized beam is magnified through the scattering device. The inspecting device has a simple structure without the need of extra expensive instruments and extra processing procedures for the samples of optical films. The inspection procedure is simple and doesn't take a long time. Its cost is also not expensive. It is beneficial to reduce the production cost.

## Description

### BACKGROUND OF THE INVENTION

### (1) Field of the Invention

The present invention is related to an inspecting device for optical films, which is especially applied in the inspection as feeding raw materials to inspect the thickness homogeneousness and defects of optical films and report the inspection results when supplying raw materials. The structure of the inspecting device is simple and we don't need extra expensive instruments and extra processing procedures for optical film samples for inspection. It doesn't take a long time for the inspecting procedures. Its cost is also not high. It's very beneficial for reducing production cost.

### (2) Description of the Prior Art

The polarizer is one of the indispensable key components in liquid crystal display industry. There are three types: TN (Twisted Nematic), STN (Super Twisted Nematic), and TFT (Thin Film Transistor) in the application of LCD. As the prosperity of LCD panel industry, the market of polarizers also largely grows. The function of a polarizer is to filter the light of unspecific direction and become the light of specific direction. If we put two polarizers with their polarization direction being right angle, the light passing through one polarizer cannot pass through the other polarizer and will become dark. However, if we utilize voltage to control the molecule array direction in a liquid crystal layer, we can make the direction of polarized light to turn 90 degree and to pass through the other polarizer. It will show white light and make the panel to display light or dark. Briefly, the main function of a polarizer is to polarize the non-polarized light and make the light to pass through the liquid crystal layer to be polarized light.

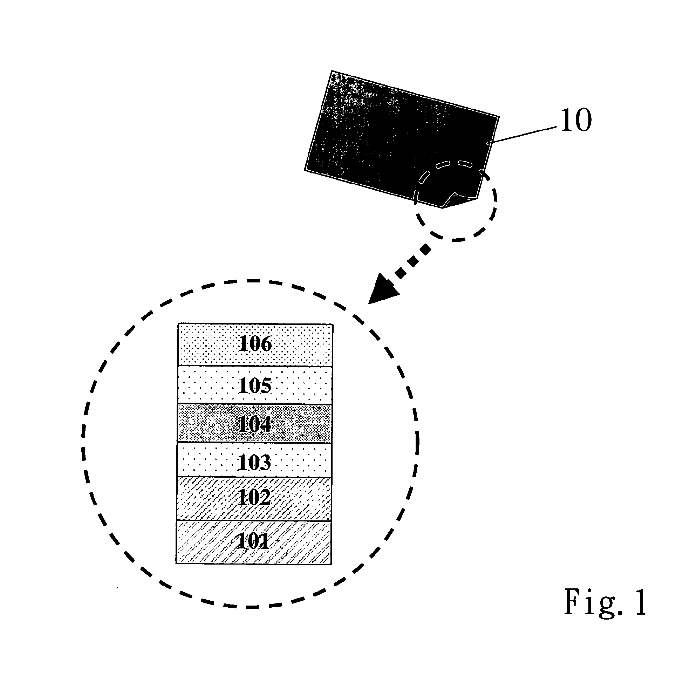

Referring to FIG. 1, the film layer structure of a polarizer is illustrated. If we magnify the cross section of a polarizer, it is a multi-layer film. Wherein, since the molecule stretching property of PVA 104 (Polyvinyl Alcohol) has polarized action, it is usually used as the basic component of polarization. When PVA 104 is stretched to become a film, its both sides are usually adhibited a TAC (Triacetyl Cellulose) film 103,105 to protect the shrink of PVA 104. We should also paint pressure sensitive glue (PSA) 102, a separative film 101, and a protecting film 106 on its outsides to provide better protection.

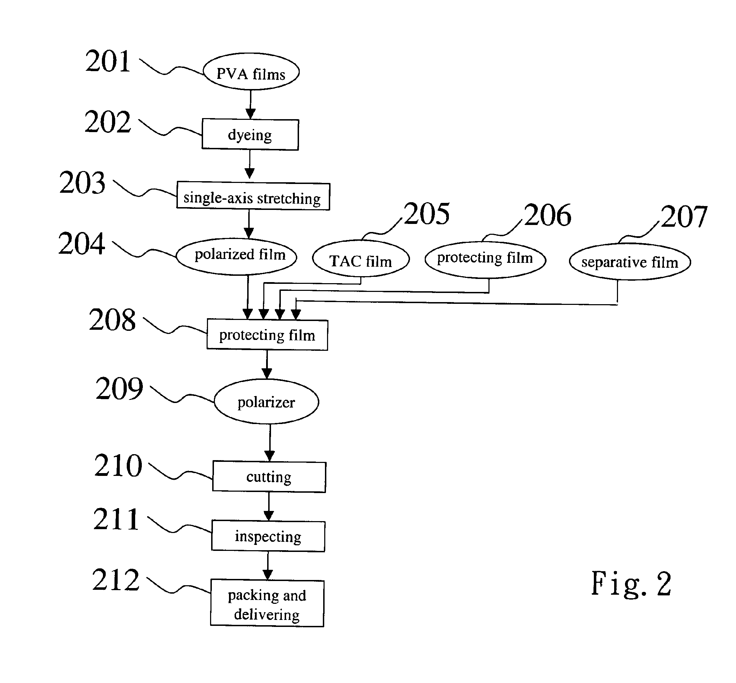

The process of a polarizer can be divided into pre-process and past-process. As shown in FIG2, the process diagram of a polarizer is illustrated. In the pre-process, after winding large-scale PVA films (step 201), dying (step 202), and single-axis stretching (step 203) to form a polarized film (step 204), then we add TAC films (step 205) on the upper and lower sides. Furthermore, we add a protecting film on the outside of the upper layer of a TAC film (step 206). We can also adhibit a separative film (step 207) and then a protecting film (step 208) on the outside of the lower layer of a TAC film to make a polarizer semimanufacture (step 209); After that we proceed the past-process such as cutting (step 210), inspecting (step 211), packing and delivering (step 212).

Since the polarizer is a multi-layer optical film product, the raw material quality of each film layer, the homogeneousness of painting, and the cohesiveness between layers will affect the properties of polarizer products. In the present production line, there are inspecting points at the end of pre-process. Using polarized light directly and indirectly penetrating inspecting method, we can inspect the film homogeneousness and defects of polarizer semimanufacture. However, the defects and the gooseflesh of optical films are made when feeding raw materials but can't be cleaned out. We have to inspect them when semimanufactures are made. It wastes manpower and resources, increases production cost, but can't provide the quality condition of optical film materials to the suppliers for improvement.

Thus in the process of polarizer, if we can proceed a simple, fast inspection for optical film materials when feeding the optical film materials (such as TAC, PE, PET), it will be conducive to avoid defects of products. It will be the direction of improvement in the process techniques of polarizers.

The invention provides an inspecting device for optical films. The inspecting device is installed in the location of feeding raw materials to inspect the quality of fed optical film materials and the homogeneousness of films, and report the inspection results to the materials suppliers in time. It is conducive for improvement and can reduce the production cost. The inspection cost of the inspecting device is not high. We don't need to have any expensive facility or extra process for optical film samples.

### SUMMARY OF THE INVENTION

The invention is an inspecting device for optical films, which can be installed before the optical film materials are fed. The main purpose is to inspect before raw materials are fed and to discern if the films are homogeneous and if there are defects. We can report the quality status of the optical film materials to suppliers for the improvement and promotion of the quality of materials.

The invention is an inspecting device for optical films. Its secondary purpose is to provide a simple, low-inspection-cost inspecting device. Using the inspecting device to inspect optical films is conducive to reduce production cost.

The invention is an inspecting device for optical films used to inspect the optical films. It comprises one or more than one illuminant, a filtering device, one or more than one polarization device, and a scattering device. The illuminant radiates a beam through the filtering device to filter the most suitable beam for inspection and to be polarized through the polarization device because of the polarization action. The polarized beam is magnified as it passes through the scattering device and increases the inspection range of optical films. When polarized light passes through the optical films for inspection, if the film is not homogeneous or there are defects in the films, there will be a phase difference of the polarized light and make the beam to become light or dark after projection to discern the status of the optical films. The inspecting device can have a screen. It is conducive to show the inspection results of optical films by projecting the image on the screen.

To help those who are familiar with the techniques to realize the purpose, the characteristic, and the function of the invention, we describe the invention by the embodiment examples and figures as follow:

### BRIEF DESCRIPTION OF THE DRAWINGS

FIG 1 is the film layer structure diagram of a polarized light plate;
FIG2 illustrates the production flow chart of a polarized light plate;
FIG. 3 illustrates the device diagram of the optical film inspecting device of the invention as inspecting an optical film;
FIG 4 shows the diagram of the first better embodiment example;
FIG 5 illustrates the diagram of the second better embodiment example;
FIG6 illustrates the diagram of the third better embodiment example;

### DETAILED DESCRIPTION OF THE PREFERRED EMBODIMENTS

The present invention is an inspecting device for optical films used to inspect the thickness homogeneousness and defects of optical films.

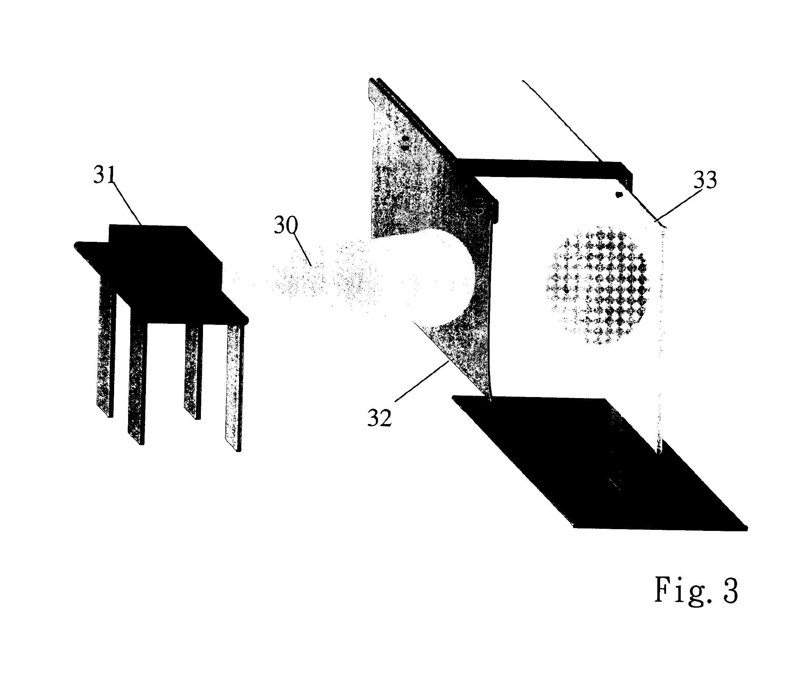

As shown in FIG. 3, the device diagram of the optical film inspecting device of the invention as inspecting an optical film is illustrated. Wherein an inspection beam 30 is radiated from the inspecting device 31, the beam 30 irradiates on an optical film sample 32 for inspection and appears light and dark. Furthermore, after the inspecting beam 30 passes through the optical film sample 32, it can projects on a screen 33 and become visible to discern the inspection results.

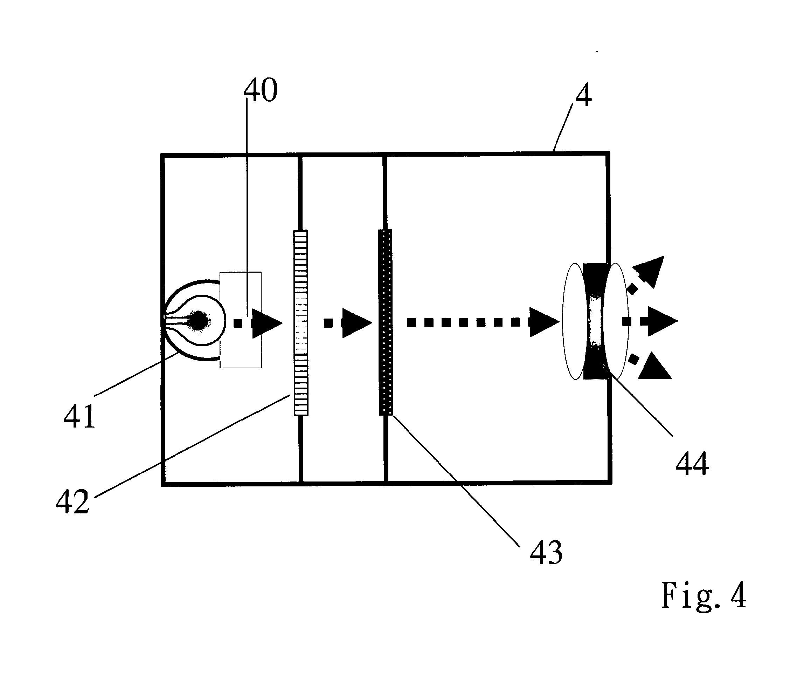

As shown in FIG 4, the device diagram of the first better embodiment example is illustrated. This is an optical film inspecting device 4 of the invention. A beam 40 is radiated form an illuminant 41 and passes through a filter 42 to filter suitable wavelength range for this inspection. Its range comprises red, green and blue light. The filtered beam passes through a penetrative polarization generator 43 to polarize the beam to be polarized light. The polarized light passes through a concave lens 44, is magnified, and is radiated from the inspecting device 4 to irradiate on the optical film for inspection (not shown in the figure). The polarized light can be projected on a screen (also not shown in the figure) and become visible to discern the inspection results. Moreover, the penetrative polarization generator 43 can comprise an optical piezoelectric ceramic material (such as : PLZT).

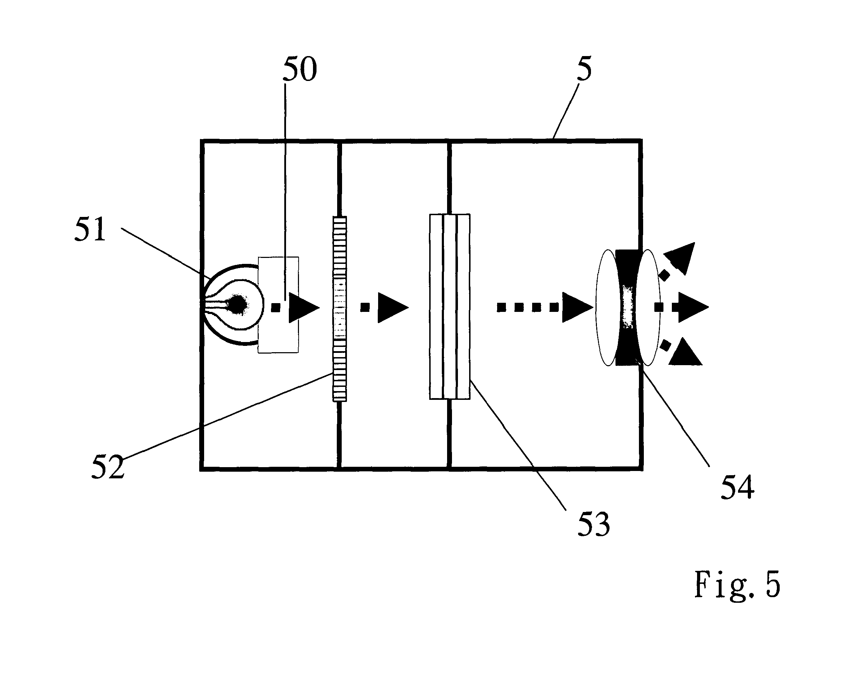

As shown in FIG.5, the device diagram of the second better embodiment example is illustrated. This is an optical film inspecting device 5 of the invention. A beam 50 is radiated form an illuminant 51 and passes through a filter 52 to filter suitable wavelength range for this inspection. Its range comprises red, green and blue light. The filtered beam passes through a glass base plate 53 of two or more than two layers to polarize the beam to be polarized light. The polarized light passes through a concave lens 54, is magnified, and is radiated from the inspecting device 5 to irradiate on the optical film for inspection (not shown in the figure). The polarized light can be projected on a screen (not shown in the figure) and become visible to discern the inspection results. Moreover, the glass base plate 53 of two or more than two layers can be replaced by a plastic film of two or more than two layers.

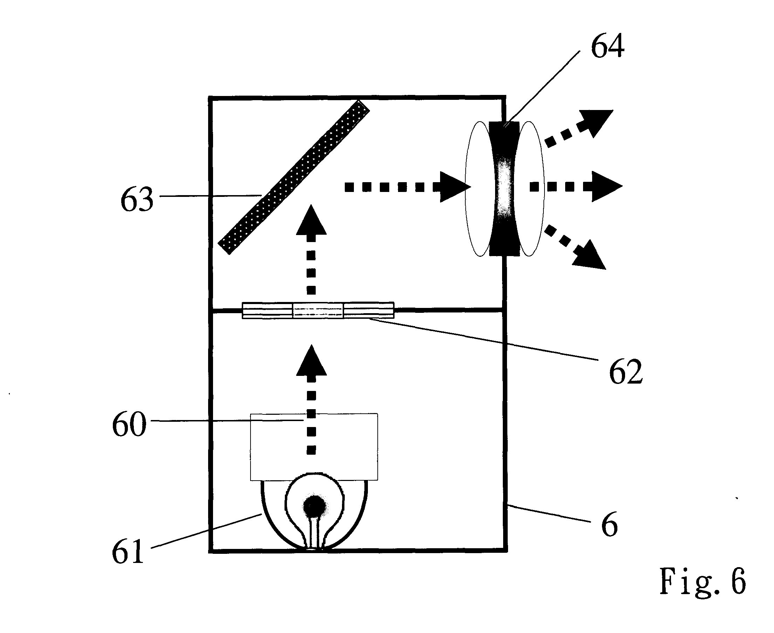

Referring to FIG 6, the device diagram of the third better embodiment example is illustrated. This is an optical film inspecting device 6 of the invention. A beam 60 is radiated form an illuminant 61 and passes through a filter 62 to filter suitable wavelength range for this inspection. Its range comprises red, green and blue light. The filtered beam passes through a reflective polarization generator 63 to polarize the beam to be polarized light. The polarized light passes through a concave lens 64, is magnified, and is radiated from the inspecting device 6 to irradiate on the optical film for inspection (not shown in the figure). The polarized light can be projected on a screen (not shown in the figure) and become visible to discern the inspection results.

The present invention is an inspecting device for optical films used not only to inspect the gooseflesh of optical films but also to inspect if there are scratches and unevenly painting when feeding raw materials. Moreover, since the structure of the inspecting device is simple, it is not necessary to install other expensive instruments and to proceed extra procedures of the optical film sample for inspection. We can inspect as the optical film raw materials are fed and discern the quality of the optical film raw materials. Thus we can report the inspection results to the suppliers. It doesn't take a long time for the inspection procedures. Its cost is also not high. It is beneficial for reducing production cost.

We have provided a detailed description of this present invention. What we have described is only three of the better embodiment examples of the invention. It can't restrict the embodiment scope of the invention. All the variation and modification from the application extent of this invention should still belong to the patent scope of the invention.

## Claims

1. An inspecting device for optical films used to inspect the optical films, comprising :
one or more than one illuminant ;
one or more than one polarization device ;
the illuminant radiates a beam to be polarized through the polarization device because of the polarization action.

2. The inspecting device for optical films according to claim 1, wherein the inspecting device comprises a filtering device, which is located between the illuminant and the polarization device.

3. The inspecting device for optical films according to claim 1 or 2, wherein the inspecting device comprises a scattering device, which is used to magnify the polarized beam.

4. The inspecting device for optical films according to claim 1, 2 or 3, wherein the polarization action means that the beam passes through the polarization device.

5. The inspecting device for optical films according to claim 1, 2, 3, wherein the polarization action means that the beam is reflected from the polarization device.

6. The inspecting device for optical films according to claim 4, wherein the polarization device is any one of : a penetrative polarization generator, a glass base plate of two or more than two layers, a plastic film of two or more than two layers.

7. The inspecting device for optical films according to claim 5, wherein the polarization device is a reflective polarization generator.

8. The inspecting device for optical films according to one of claims 2 to 7, wherein the filtering device is a filter.

9. The inspecting device for optical films according to one of claims 3 to 8, wherein the scattering device is a concave lens.

10. The inspecting device for optical films according to any one of the preceeding claims, wherein the inspecting device further is collocated with a screen to discern the inspection results.

11. The inspecting device for optical films which is used to inspect optical films, comprising :
one or more than one illuminant ;
one or more than one polarization device ;
a scattering device ;
the illuminant radiates a beam to be polarized through the polarization device because of the polarization action. The polarized beam is magnified as it passes through the scattering device.

12. The inspecting device for optical films according to claim 11, wherein the inspecting device comprises a filtering device, which is located between the illuminant and the polarization device.

13. The inspecting device for optical films according to claim 11, wherein the polarization action means that the beam passes through the polarization device.

14. The inspecting device for optical films according to claim 11, wherein the polarization action means that the beam is reflected from the polarization device.

15. The inspecting device for optical films according to claim 13, wherein the polarization device is any one of : a penetrative polarization generator, a glass base plate of two or more than two layers, a plastic film of two or more than two layers.

16. The inspecting device for optical films according to claim 14, wherein the polarization device is a reflective polarization generator.

17. The inspecting device for optical films according to claim 11, wherein the scattering device is a concave lens.

18. The inspecting device for optical films according to claim 13, wherein the filtering device is a filter.

19. The inspecting device for optical films used to inspect the optical films, comprising :
one or more than one illuminant ;
one or more than one polarization device ;
a filtering device ;
a scattering device ;
the illuminant radiates a beam through the filtering device to filter the most suitable beam for inspection and to be polarized through the polarization device because of the polarization action. The beam after polarized is magnified as it passes through the scattering device.

20. The inspecting device for optical films according to claim 19, wherein the polarization action means that the beam passes through the polarization device.

21. The inspecting device for optical films according to claim 19, wherein the polarization action means that the beam is reflective from the polarization device.

22. The inspecting device for optical films according to claim 20, wherein the polarization device is any one of: a penetrative polarization generator, a glass base plate of two or more than two layers, a plastic film of two or more than two layers.

23. The inspecting device for optical films according to claim 21, wherein the polarization device is a reflective polarization generator.

24. The inspecting device for optical films according to claim 19, wherein the filtering device is a filter.

25. The inspecting device for optical films according to claim 19, wherein the scattering device is a concave lens.
